# EUROPEAN PATENT APPLICATION

(11) **EP 4 661 034 A1**
(43) Date of publication of application: **10.12.2025**
(21) Application number: 23919807.0
(22) Date of filing: 26.04.2023
(51) Int. Cl.: H01B 12/16, H01B 12/06

(54) **SUPERCONDUCTING CABLE AND ELECTRIC PROPULSION SYSTEM**

(30) Priority: 31.01.2023 JP 2023013361
(71) Applicant: SWCC Corporation, Kawasaki-shi, Kanagawa 210-0024 (JP); Kyushu University, National University Corporation, Nishi-ku Fukuoka-shi Fukuoka 819-0395 (JP)
(72) Inventor: SHIOHARA, Kei, Kawasaki-shi, Kanagawa 210-0024 (JP); ADACHI, Kazuhisa, Kawasaki-shi, Kanagawa 210-0024 (JP); MIDO, Nobuhiro, Kawasaki-shi, Kanagawa 210-0024 (JP); AOKI, Yuji, Kawasaki-shi, Kanagawa 210-0024 (JP); IWAKUMA, Masataka, Fukuoka-shi, Fukuoka 819-0395 (JP)
(74) Representative: impuls legal PartG mbB
(86) International application number: PCT/JP2023/016421
(87) International publication number: WO 2024/161670

(57) **Abstract**

Provided is a superconducting cable and an electric propulsion system equipped with the superconducting cable, said cable capable of achieving simplified overall configuration and weight reduction while ensuring high current carrying performance. The superconducting cable comprises: a heat insulating pipe having an internal space for circulating a refrigerant during use; and a plurality of superconducting laminated conductors that are arranged in a multi-core structure within the internal space and are insulated from one another, and that are each a laminated body formed by stacking a plurality of tape-shaped superconducting wires. The heat insulating pipe is made of a resin.

## Description

### Technical Field

The present invention relates to a superconducting cable and an electric propulsion system.

### Background Art

Conventionally, superconducting cables that use superconducting coated conductors as conductors at cryogenic temperatures, allowing high current transmission with low loss, are known. For example, in propulsion systems for aircraft and other flying objects being considered for electrification to reduce CO₂ emissions, there is an increasing need for superconducting technology that is lightweight and capable of high efficiency and high output. To realize such propulsion systems, the development of superconducting cables capable of carrying high currents suitable for supplying power to electric motors replacing jet engines is underway.

For example, Patent Literature (hereinafter, referred to as "PTL") 1 describes a three-phase coaxial type superconducting cable. The superconducting cable described in PTL 1 has a double-pipe structure with an insulating inner pipe and an insulating outer pipe made of metal, housing a cable core with a plurality of superconducting layers stacked coaxially inside the insulating inner tube, allowing coolant circulation, and thermally insulating the insulating inner tube and the insulating outer tube from each other by creating a vacuum between them.

### Citation List

### Patent Literature

PTL 1
Japanese Patent Application Laid-Open No. 2020-119769

### Summary of Invention

### Technical Problem

However, in the conventional superconducting cables described above, the cable core has a coaxial structure, which makes the overall configuration complex and may result in increased weight. For example, in realizing electrically powered flying objects as described above, the lightweight and compact design of the entire electric propulsion system including the electric motors and the like is an important issue. The superconducting cable applied to this system is also required to be lightweight and have a simple structure.

An object of the present invention is to provide a superconducting cable and an electric propulsion system equipped with the superconducting cable that can simplify and lighten the overall structure while ensuring high current-carrying capacity.

### Solution to Problem

One aspect of a superconducting cable according to the present invention includes:
a thermal insulation pipe having an internal space for circulating a coolant during use; and
a plurality of superconducting stacked conductors, each being a stack of a plurality of tape-shaped superconducting coated conductors, the plurality of superconducting stacked conductors being insulated from one another and arranged in a multi-core structure within the internal space, in which
the thermal insulation pipe is made of resin.

One aspect of an electric propulsion system according to the present invention is an electric propulsion system mounted on transportation equipment, and including:
the superconducting cable described above;
a power source; and
an electric motor, in which
the power source and the electric motor are connected to each other by the superconducting cable, and
the electric motor is driven to propel the transportation equipment by supplying power through the superconducting cable.

### Advantageous Effects of Invention

According to the present invention, it is possible to provide a superconducting cable and an electric propulsion system equipped with the superconducting cable that can simplify and lighten the overall structure while ensuring high current-carrying capacity.

### Brief Description of Drawings

FIG. 1 schematically illustrates the configuration of an electric propulsion system to which a superconducting cable according to Embodiment 1 of the present invention is applied;
FIG. 2 schematically illustrates the cross-sectional configuration of a superconducting cable according to Embodiment 1 of the present invention;
FIG. 3 schematically illustrates a stacked structure of a single superconducting coated conductor;
FIG. 4 schematically illustrates a stacked structure a the superconducting stacked conductor shown in FIG. 2 and a connection structure with an electrode;
FIG. 5 is an external view of the superconducting stacked conductor shown in FIG. 2 as seen from the side;
FIG. 6 schematically illustrates the cross-sectional configuration of a superconducting cable according to Embodiment 2 of the present invention;
FIG. 7 is an external view of a spacer shown in FIG. 6 as seen from the side;
FIG. 8 schematically illustrates the cross-sectional configuration of a superconducting cable according to Variation 1 of Embodiment 2 of the present invention; and
FIG. 9 schematically illustrates the cross-sectional configuration of a superconducting cable according to Variation 2 of Embodiment 2 of the present invention.

### Description of Embodiments

Hereinafter, the superconducting cable according to an embodiment of the present invention will be described with reference to the drawings.

### (Embodiment 1)

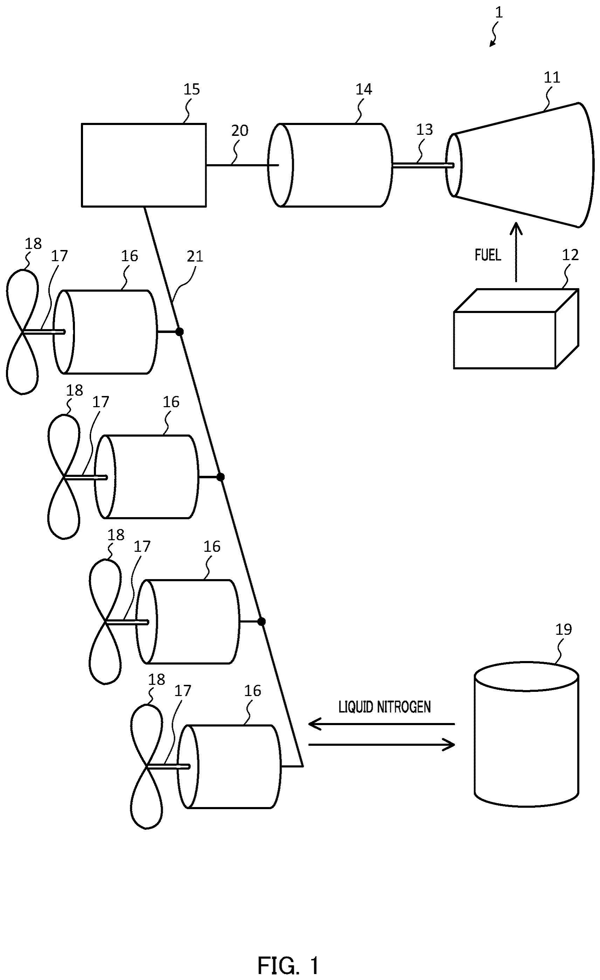

FIG. 1 schematically illustrates the configuration of an electric propulsion system to which a superconducting cable according to Embodiment 1 of the present invention is applied.

Electric propulsion system 1 is mounted on transportation equipment to propel the transportation equipment. The transportation equipment is, for example, a flying object. Electric propulsion system 1 includes turbine 11, fuel tank 12, output shaft 13, superconducting generator 14, inverter 15, superconducting motors 16, output shafts 17, propellers 18, cooling system 19, and power transmission cables 20 and 21. Here, the flying object includes aircraft, helicopters, flying drones, etc., which generate at least one of lift and thrust by rotating wings to fly in the air. The flying object can be manned or unmanned. Propeller 18 includes a so-called ducted fan.

Electric propulsion system 1 rotates turbine 11 with gas obtained by burning fuel in fuel tank 12, extracts the rotational power via output shaft 13, inputs it to superconducting generator 14 (an example of power equipment and power source), and generates power with superconducting generator 14. Electric propulsion system 1 transmits the generated power of superconducting generator 14 to inverter 15 (an example of power equipment and power source) via power transmission cable 20, and converts it from DC power to AC power in inverter 15. Electric propulsion system 1 supplies AC power to superconducting motors 16 (an example of power equipment and electric motor) via power transmission cable 21, rotates superconducting motors 16, and consequently rotates propellers 18 connected to superconducting motors 16 via output shafts 17 to generate thrust.

Superconducting cable 100 according to the present embodiment (described in detail later) is used as power transmission cables 20 and 21 between pieces of power equipment in electric propulsion system 1. In the present embodiment, power transmission cable 20 is a cable for DC energization, and power transmission cable 21 is a cable for AC energization, but both function as power supply cables from the power source (superconducting generator 14 and inverter 15) to the electric motors (superconducting motors 16). Superconducting cable 100 is applicable to both power transmission cables 20 and 21.

Electric propulsion system 1 is a fully superconducting system that uses superconductors as conductors in various pieces of power equipment such as superconducting generator 14 and superconducting motors 16, as well as power transmission cables 20 and 21 (superconducting cable 100). This enables the realization of an electric propulsion system capable of obtaining extremely high efficiency and high output.

Electric propulsion system 1 circulates liquid nitrogen (an example of coolant) inside electric propulsion system 1 using cooling system 19 to maintain the superconducting state of the superconductor during use, cooling the superconductor to a cryogenic state.

Electric propulsion system 1 is used as an electric propulsion system for flying objects (an example of transportation equipment) to propel the flying object. In this case, the power source of the flying object is replaced from a conventional jet engine to superconducting motors 16. As a result, even if the same jet fuel as before is used as fuel, fuel consumption can be significantly reduced, thereby greatly reducing CO₂ emissions. Moreover, in conventional electric motors composed of iron cores and copper wires, the weight required to obtain the thrust necessary for flying objects is more than 10 times that of a jet engine. In contrast, electric propulsion system 1 using superconducting motors 16 can theoretically achieve a higher output than the jet engine with the same weight as the jet engine, for example, more than twice the output required for flying objects to propel. In other words, the realization of an electric propulsion system for flying objects is possible.

Incidentally, to propel the flying object more efficiently with electric propulsion system 1, it is necessary to lighten and miniaturize entire electric propulsion system 1. To achieve this, it is necessary to lighten the weight and simplify the structure not only of the power equipment but also of power transmission cables 20 and 21. In the present embodiment, as described below, superconducting cable 100 is provided that can simplify and lighten the overall structure while ensuring high current-carrying capacity. Therefore, by using this superconducting cable 100 in electric propulsion system 1, it is possible to achieve the overall lightweight and compact design of electric propulsion system 1 necessary to propel the flying object more efficiently.

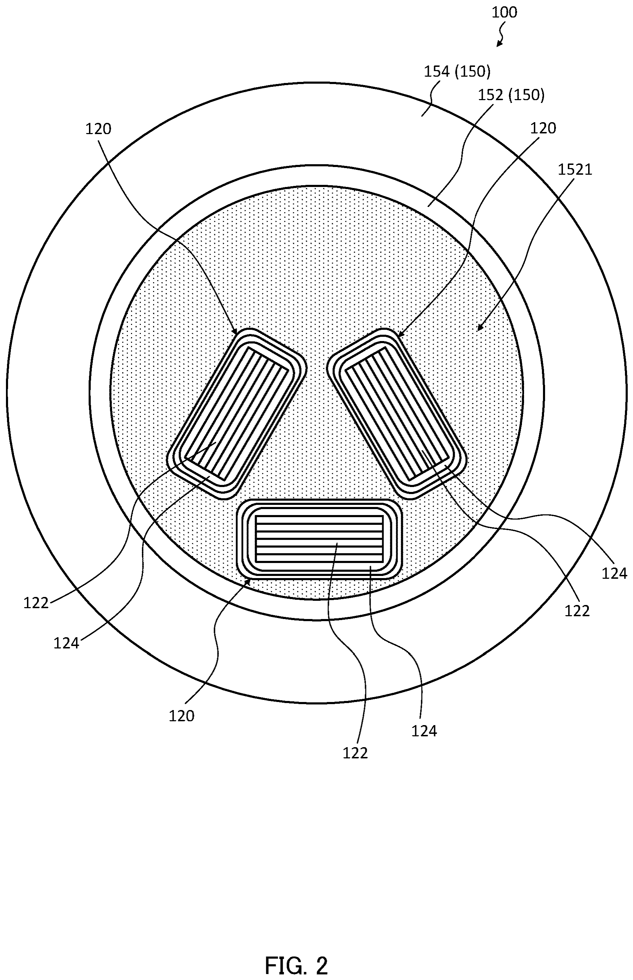

FIG. 2 schematically illustrates the cross-sectional configuration of superconducting cable 100.

Superconducting cable 100 includes a plurality of cable cores 120 and thermal insulation pipe 150. In the present embodiment, the number of cable cores 120 is three, and therefore, superconducting cable 100 is suitable for use as a three-phase cable, etc. The number of cable cores 120 may be two or more, and any number is acceptable as long as superconducting cable 100 can be made thinner and simpler.

Each cable core 120 includes superconducting stacked conductor 122 and inter-phase insulation sheet 124.

Superconducting stacked conductor 122 is a stack of a plurality of tape-shaped superconducting coated conductors 1222. Here, "tape-shaped" means that the shape is elongated and flat, with planar dimensions sufficiently large relative to its thickness. By constructing superconducting stacked conductor 122 with tape-shaped superconducting coated conductors 1222, the cross-sectional area of superconducting stacked conductor 122 in the axial direction when conducting the same current can be significantly reduced. Therefore, thermal insulation pipe 150 accommodating a plurality of superconducting stacked conductors 122 can be significantly thinned and lightened.

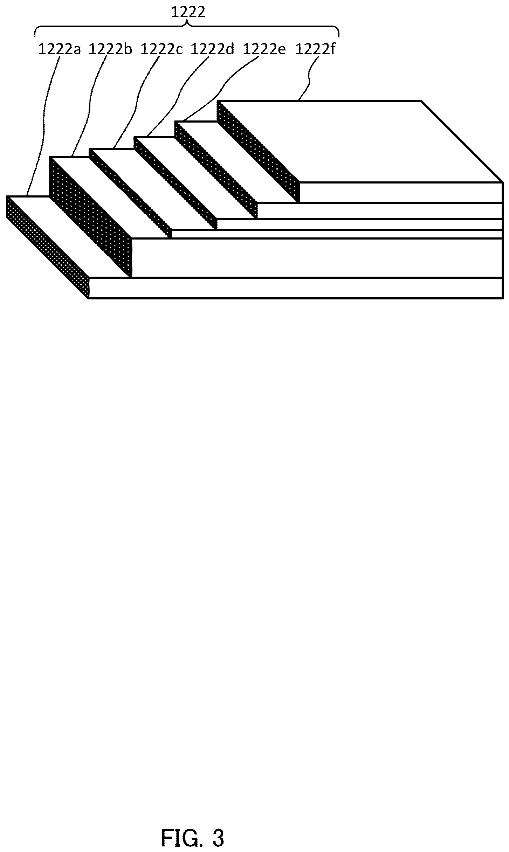

Each tape-shaped superconducting coated conductor 1222 constituting superconducting stacked conductor 122 has a stacked structure, as shown in FIG. 3, with intermediate layer 1222c, superconducting layer 1222d, and protective layer 1222e sequentially stacked on the upper surface side of substrate 1222b, and stabilization layers 1222a and 1222f stacked on the upper surface of protective layer 1222e and the lower surface of substrate 1222b. Substrate 1222b is, for example, a metal substrate. Intermediate layer 1222c has a structure in which an Al₂O₃ layer, LaMnO₃ layer, MgO layer, LaMnO₃ layer, and CeO₂ layer are sequentially stacked on one another. Superconducting layer 1222d is a layer made of a superconductor, and in the present embodiment, it is a layer made of an oxide superconductor such as yttrium-based superconductors with a relatively high critical temperature exceeding the boiling point of liquid nitrogen (77K) (ReBa₂Cu₃O_{7-δ}, where Re represents at least one element selected from the group consisting of Y, Nd, Sm, Gd, Dy, Eu, Er, Yb, Pr, and Ho, hereinafter referred to as "REBCO"). Protective layer 1222e is, for example, an Ag layer. Stabilization layers 1222a and 1222f are, for example, Cu layers. The thickness of each tape-shaped superconducting coated conductor 1222 is up to about 250 µm. It should be noted that the stacked structure, manufacturing method, thickness, and other dimensions of the aforementioned tape-shaped superconducting coated conductor can be applied using known technology, so detailed explanations are omitted here.

As described above, superconducting stacked conductor 122 is constructed by stacking a plurality of tape-shaped superconducting coated conductors 1222. The number of layers of tape-shaped superconducting coated conductors 1222 is not particularly limited, but can be determined based on the operating current value required for propulsion of the flying object by electric propulsion system 1.

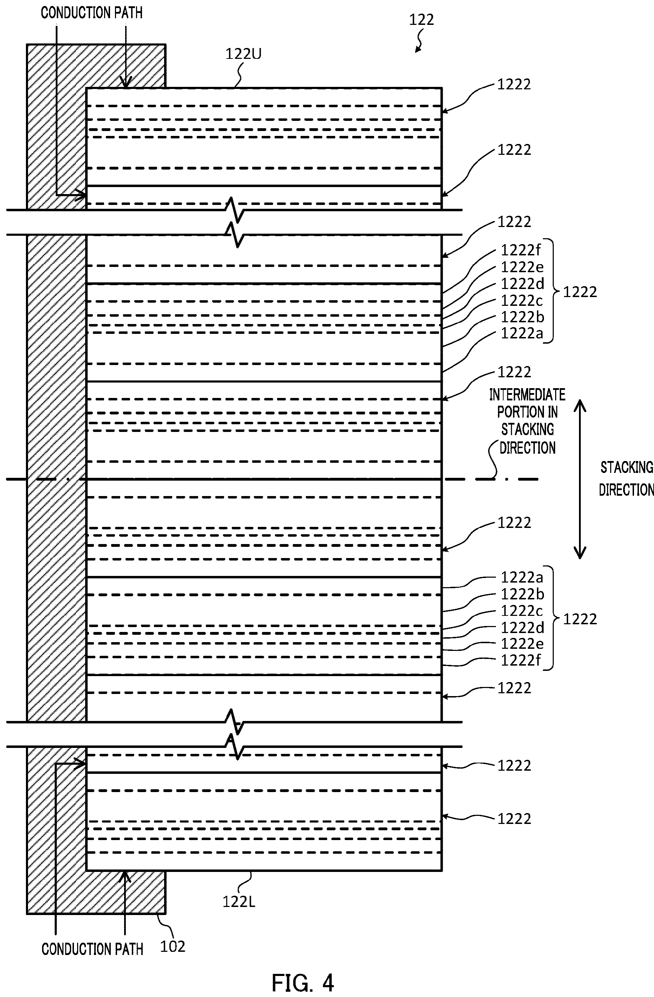

FIG. 4 schematically illustrates the stacked structure of superconducting stacked conductor 122 and the connection structure with electrode 102. Superconducting stacked conductor 122 is connected to electrode 102, with its end accommodated in a groove of electrode 102. Superconducting stacked conductor 122 is constructed by stacking a total of 30 tape-shaped superconducting coated conductors 1222 as an example. Electrode 102 is connected to, for example, superconducting generator 14, inverter 15, superconducting motors 16, and the like. Here, power is supplied to electrode 102 from the front and back sides in the stacking direction of superconducting stacked conductor 122, and each superconducting stacked conductor 122 is energized via electrode 102.

Superconducting stacked conductor 122 includes 15 tape-shaped superconducting coated conductors 1222 (an example of the upper half) stacked so as to face upward between the center and uppermost surface 122U of superconducting stacked conductor 122 in the stacking direction, and 15 tape-shaped superconducting coated conductors 1222 (an example of the lower half) stacked so as to face downward between the center and lowermost surface 122L of superconducting stacked conductor 122 in the stacking direction. In other words, superconducting layer 1222d is positioned above substrate 1222b in tape-shaped superconducting coated conductors 1222 on the front side, i.e., in the upper half, and superconducting layer 1222d is positioned below substrate 1222b in tape-shaped superconducting coated conductors 1222 on the back side, i.e., in the lower half.

Thus, superconducting stacked conductor 122 can shorten the length of the conduction path whether it is positioned on the front side (uppermost surface 122U side) or the back side (lowermost surface 122L side). Therefore, the influence on conduction due to the orientation of the stack of superconducting stacked conductor 122, i.e., the orientation of cable core 120, can be suppressed. Here, the conduction path refers to the length of the path for energization between the position where power is supplied to electrode 102 and each superconducting layer 1222d of the plurality of tape-shaped superconducting coated conductors 1222.

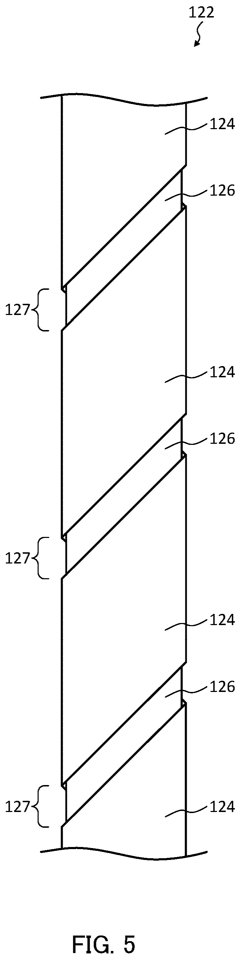

Although not shown in FIG. 4, the outer periphery of each tape-shaped superconducting coated conductor 1222 is wound with strand insulation sheet 126 (see FIG. 5) and each tape-shaped superconducting coated conductor 1222 is insulated from other tape-shaped superconducting coated conductors 1222. Strand insulation sheet 126 is made of a material with a smooth surface, such as a resin with heat resistance and voltage resistance. Strand insulation sheet 126 may be, for example, a tape made of polyimide. Therefore, in each superconducting stacked conductor 122, adjacent tape-shaped superconducting coated conductors 1222 in the stacking direction can slide on each other. This ensures the sliding ability between stacked tape-shaped superconducting coated conductors 1222. Additionally, sliding ability can be obtained between tape-shaped superconducting coated conductors 1222 positioned at uppermost surface 122U and lowermost surface 122L and inter-phase insulation sheets 124 on the outer periphery. Therefore, the flexibility and bendability of superconducting stacked conductor 122, and consequently superconducting cable 100, can be ensured.

The outer periphery of superconducting stacked conductor 122 is wound with inter-phase insulation sheet 124. Inter-phase insulation sheet 124 is made of an insulation material. Inter-phase insulation sheet 124 can be made of, for example, kraft paper. In the present embodiment, inter-phase insulation sheet 124 is wound multiple times around the outer periphery of each superconducting stacked conductor 122, allowing insulation between superconducting stacked conductors 122 using only inter-phase insulation sheet 124. That is, inter-phase insulation between superconducting stacked conductors 122 can be ensured without requiring other insulating structures. Therefore, simplification and weight reduction of the configuration of superconducting cable 100 can be achieved. As an example, the thickness of inter-phase insulation sheet 124 wound multiple times is 2 mm, which is sufficiently thin, so even with multiple winding, it does not significantly increase the diameter of cable core 120.

Inter-phase insulation sheet 124 is spirally wound with gaps 127 in the axial direction, as shown in FIG. 5. Gaps 127 in inter-phase insulation sheet 124 are, for example, about 1-2 mm. This can suppress the occurrence of wrinkles and the like associated with the bending of superconducting stacked conductor 122. Inter-phase insulation sheet 124 may also be wound to completely cover the outer periphery of superconducting stacked conductor 122 without leaving gaps 127.

Thermal insulation pipe 150 is a tubular member capable of accommodating a plurality of cable cores 120 together as single superconducting cable 100 and being filled with a coolant for cooling cable cores 120 to circulate the coolant. Additionally, thermal insulation pipe 150 has thermal insulation properties that can block external heat from being transmitted inside. The following exemplary embodiment will be described in conjunction with the case where thermal insulation pipe 150 is corrugated pipe 152.

Thermal insulation pipe 150 includes corrugated pipe 152 and thermal insulation material 154. Thermal insulation material 154 is provided along the outer periphery of corrugated pipe 152. Thermal insulation material 154 may be provided to cover the outer peripheral surface of corrugated pipe 152.

Corrugated pipe 152 is a tubular member with a cross-section of a circular tube shape in the axial direction, and circumferential grooves are formed in a wave shape in the inner and outer peripheral surfaces. Corrugated pipe 152 may have circumferential grooves further formed in an axial spiral shape in the inner and outer peripheral surfaces. Corrugated pipe 152 has internal space 1521 whose outer edge is the inner peripheral surface of the circular tube shape. Internal space 1521 can accommodate a plurality of cable cores 120 and can cause a coolant to circulate in one direction during use.

Superconducting cable 100 does not have another tubular member for circulating coolant inside corrugated pipe 152, which corresponds to a former in conventional three-phase coaxial cables. That is, corrugated pipe 152 is a single tubular member that accommodates a plurality of cable cores 120 and forms a flow path for circulating coolant. In other words, thermal insulation pipe 150 has a single-pipe structure. The material of corrugated pipe 152 is preferably one that has a certain elasticity at the cryogenic temperatures where the coolant is used. In the present embodiment, corrugated pipe 152 is made of resin. It is desirable that the resin material of corrugated pipe 152 has a cold resistance temperature of -50°C or lower. Also, it is desirable that the material of corrugated pipe 152 has flexibility and elasticity at the cryogenic temperatures where the coolant is used. Moreover, it is desirable that the resin material of corrugated pipe 152 is suitable for extrusion molding. Examples of resin materials constituting corrugated pipe 152 include polytetrafluoroethylene resin, polyphenylsulfone resin, and glass fiber reinforced resin. The resin material constituting corrugated pipe 152 may also be a rubber substitute material such as polyolefin resin.

In conventional superconducting cables with a double-tube structure, such as the aforementioned superconducting cables, the double tube accounts for a significant proportion (e.g., about 70%) of the total weight of the cable. On the other hand, in the present embodiment where thermal insulation pipe 150 adopts a single-pipe structure, the number of tubular members is simply reduced from two to one, significantly reducing the overall weight of the cable. Additionally, there is no need to provide another large-diameter tube outside the pipe forming the internal space for coolant and the like, i.e., outside corrugated pipe 152. Therefore, the diameter reduction of thermal insulation pipe 150, and consequently entire superconducting cable 200, can be achieved.

Thermal insulation pipe 150 has a configuration in which thermal insulation material 154 is disposed along the peripheral surface of corrugated pipe 152. It is preferable to use, for thermal insulation material 154, a material with thermal insulation properties at the cryogenic temperatures where the coolant is used. Thermal insulation material 154 prevents the intrusion of heat from the outside into corrugated pipe 152. Thermal insulation material 154 may be, for example, an insulation sheet. The insulation sheet is a material in which polyester net and/or non-woven fabric are layered on an aluminum-deposited polyester film. The insulation sheet is wrapped around the outer periphery of corrugated pipe 152 to cover the outer periphery of corrugated pipe 152. The insulation sheet prevents the intrusion of radiant heat into corrugated pipe 152. With this configuration, even with a single-pipe structure, thermal insulation suitable for superconducting cable 100 can be achieved. Additionally, by arranging thermal insulation material 154 along the peripheral surface of corrugated pipe 152, reliable thermal insulation can be achieved.

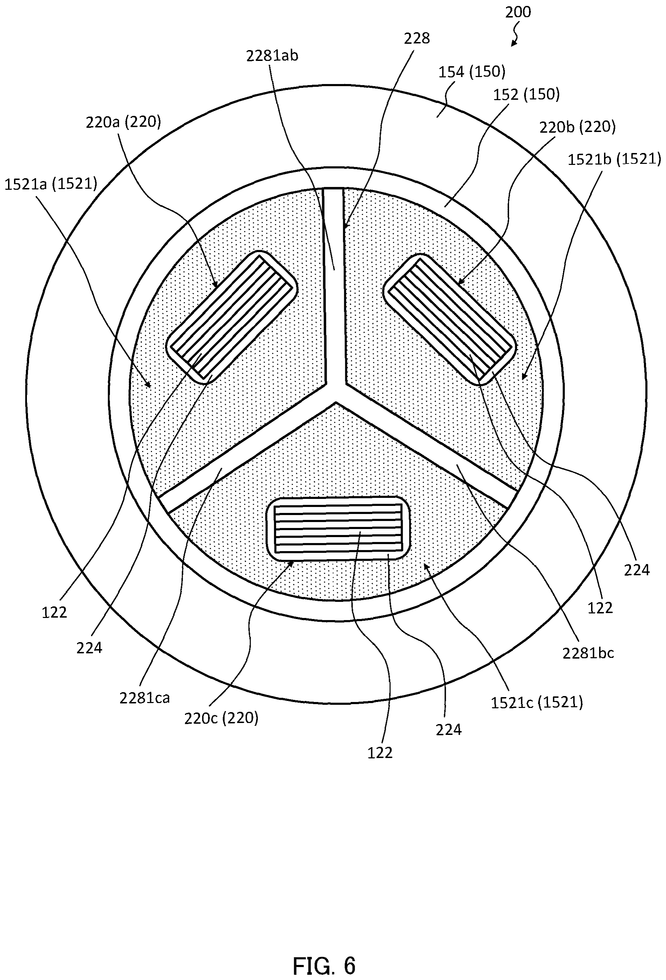

In particular, in the present embodiment, thermal insulation pipe 150 is a single-pipe structure composed of corrugated pipe 152, and it is preferable to arrange thermal insulation material 154 on the outer peripheral side of corrugated pipe 152. In the present embodiment, as shown in FIG. 6, thermal insulation material 154 is provided to cover the outer peripheral surface of corrugated pipe 152. In this configuration, most of the interior of superconducting cable 100 can be used as a space for the coolant, making it easy to secure the flow path of the coolant even if corrugated pipe 152 is made thinner.

In internal space 1521 of corrugated pipe 152, a plurality of cable cores 120, each including superconducting stacked conductor 122, are arranged in a multi-core structure (in the present embodiment, a three-core structure). By adopting a multi-core structure of cable cores 120 configured with superconducting stacked conductors 122 as in the present embodiment, the overall configuration of the cable can be simplified compared to the conventional coaxial structure. In this case, the outer diameter of bundled three cable cores 120 can be significantly reduced compared to the cable core of the conventional superconducting cable with three layers of superconductors arranged coaxially. By reducing the diameter of cable core 120 in this way, it is possible to significantly reduce the diameter of thermal insulation pipe 150, resulting in a significant reduction in the weight of thermal insulation pipe 150, thereby reducing the overall weight of the cable. Furthermore, when thermal insulation pipe 150 is made into a single-pipe structure, the overall weight of the cable can be further reduced.

Furthermore, in the present embodiment, the conductors respectively constituting the plurality of cable cores 120 are stacks (superconducting stacked conductors 122) with many layers of tape-shaped superconducting coated conductors 1222, making the structure simple.

That is, according to the present embodiment, superconducting cable 100 includes thermal insulation pipe 150 with internal space 1521 for circulating coolant during use, and a plurality of superconducting stacked conductors 122, each being a stack of a plurality of tape-shaped superconducting coated conductors 1222, the plurality of superconducting stacked conductors 122 being insulated from one another and arranged in a multi-core structure within internal space 1521. With this configuration, as described above, it is possible to ensure high current-carrying capacity while achieving both simplification and weight reduction of the overall cable structure.

Also, as shown in FIG. 2, in the present embodiment, a plurality of cable cores 120, that is, a plurality of superconducting stacked conductors 122, are accommodated in thermal insulation pipe 150 in a loosely inserted state. The outer diameter of the bundled a plurality of cable cores 120 is sufficiently smaller than the inner diameter of thermal insulation pipe 150, allowing the entire capacity of internal space 1521, other than cable core 120, to be used as the capacity for the coolant. Therefore, even if superconducting cable 100 is made thinner, a certain level of coolant capacity can be secured. Also, since there is some play for accommodation of cable cores 120, it is possible to reduce contact or the like between thermal insulation pipe 150 and cable cores 120 when thermal insulation pipe 150 is bent. This ensures the flexibility and bendability of superconducting cable 100. Therefore, the handling of superconducting cable 100 is improved when wiring superconducting cable 100 in the usage environment.

### (Demonstration Test)

The inventors manufactured superconducting cable 100 and conducted demonstration tests on manufactured superconducting cable 100. Specifically, the critical current value (***I***_{c} value) of each phase of the cable was obtained using the DC four-terminal method in an environment of immersion cooling in liquid nitrogen (77K) under atmospheric conditions. As a result, the ***I***_{c} value of each phase was about 1,900 A, achieving DC energization exceeding the target ***I***_{c} value (=1,570 A) required for the propulsion of the aircraft. That is, this test confirmed that superconducting cable 100 according to the present embodiment is suitable for at least DC energization (use as power transmission cable 20) in an electric propulsion system for aircraft (electric propulsion system 1). The length of superconducting cable 100 used in this demonstration test is 20 m.

For example, in the three-phase coaxial superconducting cable (rated at 11 kV and 3 kA) described in PTL 1, the weight of the coaxial structure cable core is 2.4 kg/m, the weight of the double corrugated pipe is 7.9 kg/m, there is no weight for the thermal insulation material (vacuum), and the weight of liquid nitrogen is 1.8 kg/m, resulting in a total weight of 12.1 kg/m and a unit weight of 4.03 kg/kA/m. In contrast, in superconducting cable 100 (rated at 1 kV and 1.5 kA) according to the present embodiment, the weight of three-core structure cable core 120 is 0.57 kg/m, the weight of single corrugated pipe 152 is 0.58 kg/m, the weight of thermal insulation material 154 is 0.27 kg/m, and the weight of liquid nitrogen is 0.52 kg/m, resulting in a total weight of 1.94 kg/m and a unit weight of 1.29 kg/kA/m. Therefore, superconducting cable 100 according to the present embodiment achieved about 1/3 the weight of the conventional three-phase coaxial superconducting cable. Here, by using the a stacked conductor, the outer diameter of the cable core of φ64.3 mm in the three-phase coaxial superconducting cable (rated at 11 kV and 3 kA) was reduced to the outer diameter of φ39.5 mm in superconducting cable 100 (rated ta 1 kV and 1.5 kA), achieving weight reduction at the same time. The reduction in the outer diameter of cable core 120 greatly contributes to the weight reduction of entire superconducting cable 100.

### (Embodiment 2)

Embodiment 2 of the present invention is described below. In the following description, including the present embodiment, parts common or corresponding to the above-described embodiment are denoted by the same reference numerals, and detailed descriptions thereof are omitted or simplified. Here, the focus will be on the differences from the above-described embodiment.

FIG. 6 schematically illustrates the cross-sectional configuration of superconducting cable 200 according to the present embodiment. Superconducting cable 200 according to the present embodiment mainly differs from superconducting cable 100 described in Embodiment 1 in that it uses inter-phase insulation spacer 228 for inter-phase insulation.

Inter-phase insulation spacer 228 divides internal space 1521 of thermal insulation pipe 150 into a plurality of chambers 1521a, 1521b, and 1521c. A plurality of cable cores 220a, 220b, and 220c (hereinafter sometimes collectively referred to as "cable cores 220") are disposed in these multiple chambers 1521a, 1521b, and 1521c, respectively. Each of cable cores 220a, 220b, and 220c is configured by winding inter-phase insulation sheet 224 around the outer periphery of superconducting stacked conductor 122.

The material of inter-phase insulation spacer 228 is not particularly limited as long as it has a predetermined insulating property. Inter-phase insulation spacer 228 can be made significantly lighter compared to a metal one, so it is preferably made of resin. The resin material of inter-phase insulation spacer 228 is preferably highly reliable at the cryogenic temperatures where the coolant is used. Furthermore, it is desirable that the resin material balances reliability and ease of processing. Specifically, it is desirable that the resin material of inter-phase insulation spacer 228 has a cold resistance temperature of -50°C or lower. Also, it is desirable that the material of inter-phase insulation spacer 228 has flexibility and elasticity at the cryogenic temperatures where the coolant is used. Moreover, it is desirable that the resin material of inter-phase insulation spacer 228 is suitable for extrusion molding. Examples of resin materials constituting inter-phase insulation spacer 228 include polytetrafluoroethylene resin, polyphenylsulfone resin, and glass fiber reinforced resin. The resin material constituting inter-phase insulation spacer 228 may also be a rubber substitute material such as polyolefin resin.

The mechanical properties of the resin material used when inter-phase insulation spacer 228 is made of resin include, for example, a density of 1.29 g/cm³ or less, a notched Charpy impact strength of 25 kJ/m² at -30°C as specified by ISO1791eA, and a ball indentation hardness of 124 MPa or more as specified by ISO2039-1. The electrical properties of the resin material used when inter-phase insulation spacer 228 is made of resin include, for example, a dielectric constant of 3.8 or less at 100 Hz as specified by IEC60250, a dielectric dissipation factor of 17E-4 or less at 100 Hz as specified by IEC60250, a volume resistivity of greater than 10¹³ Ω·cm as specified by IEC60093, a surface resistivity of greater than 10¹⁴ Q as specified by IEC4025, a dielectric strength of 44 kV/mm or more as specified by IEC60243-13, and a tracking resistance of 150 or more as specified by IEC60112.

Inter-phase insulation spacer 228 divides internal space 1521 into a plurality of chambers 1521a, 1521b, and 1521c around the axis of thermal insulation pipe 150 (corrugated pipe 152). Therefore, by housing cable cores 220a, 220b, and 220c in respective chambers 1521a, 1521b, and 1521c, cable cores 220a, 220b, and 220c can be distributed and maintained around the axis of thermal insulation pipe 150. This avoids the uneven distribution of cable cores 220a, 220b, and 220c within thermal insulation pipe 150, enabling more reliable inter-phase insulation and more uniform cooling.

Inter-phase insulation spacer 228 has a plurality of partitions 2281ab, 2281bc, and 2281ca extending radially in the radial direction of thermal insulation pipe 150. This allows inter-phase insulation spacer 228 to reliably divide internal space 1521 into a plurality of chambers 1521a, 1521b, and 1521c around the axis, ensuring the avoidance of uneven distribution of cable cores 220a, 220b, and 220c within thermal insulation pipe 150.

In the present embodiment, by disposing inter-phase insulation spacer 228 to divide internal space 1521 and individually placing cable cores 220 (superconducting stacked conductors 122) in formed chambers 1521a, 1521b, and 1521c, inter-phase insulation can be easily achieved. Therefore, in each cable core 220, it is not always necessary to achieve inter-phase insulation solely with inter-phase insulation sheet 224. Inter-phase insulation sheet 224 only needs to bundle superconducting stacked conductor 122 to the extent that it can maintain the stacked state of superconducting stacked conductor 122. For example, the thickness of inter-phase insulation sheet 224 may be 0.2 mm. In the present embodiment, inter-phase insulation sheet 224 is wound only once around the outer periphery of superconducting stacked conductor 122 in each cable core 220. This allows for efficient heat dissipation from superconducting stacked conductor 122 when it is energized.

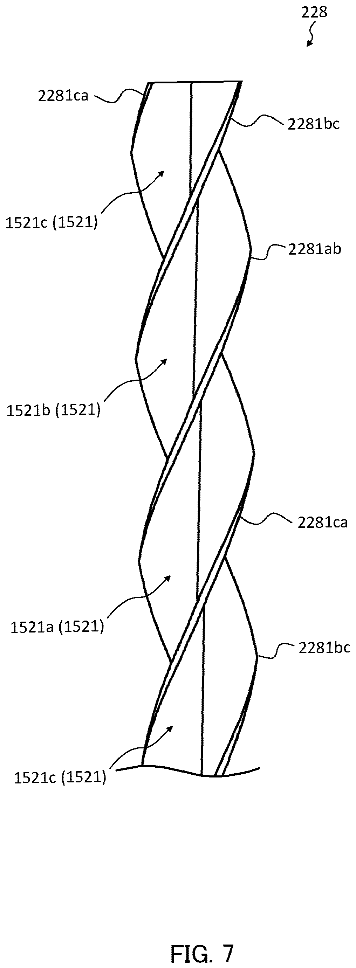

A plurality of partitions 2281ab, 2281bc, and 2281ca extend spirally in the axial direction of thermal insulation pipe 150 (see FIG. 7). Therefore, when cable cores 220a, 220b, and 220c are accommodated respectively in chamber 1521a, 1521b, and 1521c partitioned by partitions 2281ab, 2281bc, and 2281ca, cable cores 220 can be easily maintained in a twisted state. Moreover, since partitions 2281ab, 2281bc, and 2281ca are spiral in shape in the axial direction of thermal insulation pipe 150, they do not significantly hinder the flexibility and bendability of superconducting cable 200.

As described above, according to the present embodiment, superconducting cable 200 is inserted into thermal insulation pipe 150 and has inter-phase insulation spacer 228 that divides internal space 1521 into a plurality of chambers 1521a, 1521b, and 1521c. A plurality of superconducting stacked conductors 122 are individually disposed in the plurality of chambers 1521a, 1521b, and 1521c. With this configuration, inter-phase insulation can be achieved simply by placing inter-phase insulation spacer 228 inside thermal insulation pipe 150, and due to its simple structure, the overall configuration of the cable can be simplified and made lighter.

Also, as shown in FIG. 6, in the present embodiment, a plurality of cable cores 220 (a plurality of superconducting stacked conductors 122) are accommodated in a loosely inserted state in chambers 1521a, 1521b, and 1521c, respectively. As a result, the cross-sectional area of each cable core 220 in the axial direction is sufficiently smaller than the cross-sectional area of each of chambers 1521a, 1521b, and 1521c in the axial direction. Therefore, the capacity of chambers 1521a, 1521b, and 1521c other than cable cores 220 can all be used as the capacity for the coolant. Thus, cable cores 220 can be sufficiently cooled. Furthermore, since there is play for accommodation of cable cores 220, it is possible to reduce contact or the like between thermal insulation pipe 150 and cable cores 220 when bending thermal insulation pipe 150. This ensures the flexibility and bendability of superconducting cable 200. Therefore, the handling of superconducting cable 200 becomes favorable when wiring superconducting cable 200 in the usage environment.

### (Demonstration Test)

The inventors conducted a demonstration test on superconducting cable 200 according to the present embodiment. The demonstration test involved measuring AC energization of superconducting cable 200 over a length of 1 m in an environment of immersion cooling liquid nitrogen (77K) under atmospheric conditions. Since it is difficult to determine conductor degradation due to AC energization, this test measured the critical current value (***I***_{c} value) with DC energization before and after AC energization. First, the ***I***_{c} value of superconducting cable 200 obtained by the DC four-terminal method was 3,800 A. Subsequently, AC energization was performed at 51 Hz from 500 Aᵣₘₛ (load factor 0.19) to 1,400 Aᵣₘₛ (load factor 0.52). Then, the ***I***_{c} value was measured by the DC four-terminal method each time the current value was changed to determine conductor degradation. As a result, the previously known ***I***_{c} value of 3,800 A was observed, and it was confirmed that there was no degradation. In general, AC energization involves heat generation due to AC losses that do not occur during DC energization, making it more difficult to meet performance requirements compared to DC energization. However, this test confirmed that superconducting cable 200 according to the present embodiment meets the performance requirements for AC energization. That is, it was confirmed that superconducting cable 200 according to the present embodiment is also suitable for AC energization (use as power transmission cable 21) in an electric propulsion system for flying objects (electric propulsion system 1 described in embodiment 1).

Furthermore, in superconducting cable 200 (rated at 1 kV and 1.5 kA) according to the present embodiment, the weight of three-core structure cable cores 220 is 0.57 kg/m, the weight of single corrugated pipe 152 is 0.58 kg/m, the weight of thermal insulation material 154 is 0.27 kg/m, the weight of liquid nitrogen is 0.52 kg/m, and the weight of inter-phase insulation spacer 228 is 0.23 kg/m, resulting in a total weight of 2.17 kg/m and a unit weight of 1.45 kg/kA/m. Therefore, superconducting cable 200 according to the present embodiment achieved approximately 1/3 the weight compared to conventional three-phase coaxial superconducting cables.

### (Variation 1 of Embodiment 2)

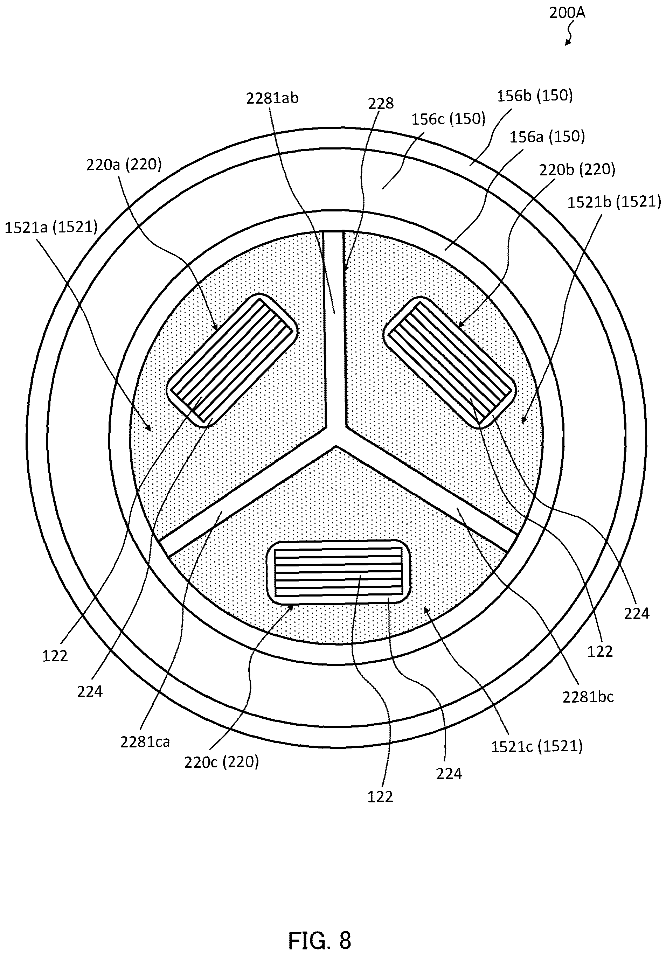

Thermal insulation pipe 150 may be a so-called vacuum insulated pipe. Specifically, in superconducting cable 200A shown in FIG. 8, thermal insulation pipe 150 has inner pipe 156a, outer pipe 156b, and space 156c between inner pipe 156a and outer pipe 156b. Here, outer pipe 156b is disposed on the outer periphery of inner pipe 156a. Space 156c of thermal insulation pipe 150 is in a vacuum state. As a result, thermal insulation pipe 150 does not need to have thermal insulation material 154 on its outer periphery, allowing it to be made thinner while effectively providing insulation. It is preferable that inner pipe 156a and outer pipe 156b are corrugated pipes. The materials of inner pipe 156a and outer pipe 156b may be the same or different. Thermal insulation pipe 150, that is, inner pipe 156a and outer pipe 156b, is formed of a resin material. Alternatively, in thermal insulation pipe 150, the material of one of inner pipe 156a and outer pipe 156b may be resin and the material of the other may be metal. Additionally, thermal insulation pipe 150 may have thermal insulation material 154 on the outer periphery of inner pipe 156a.

### (Variation 2 of Embodiment 2)

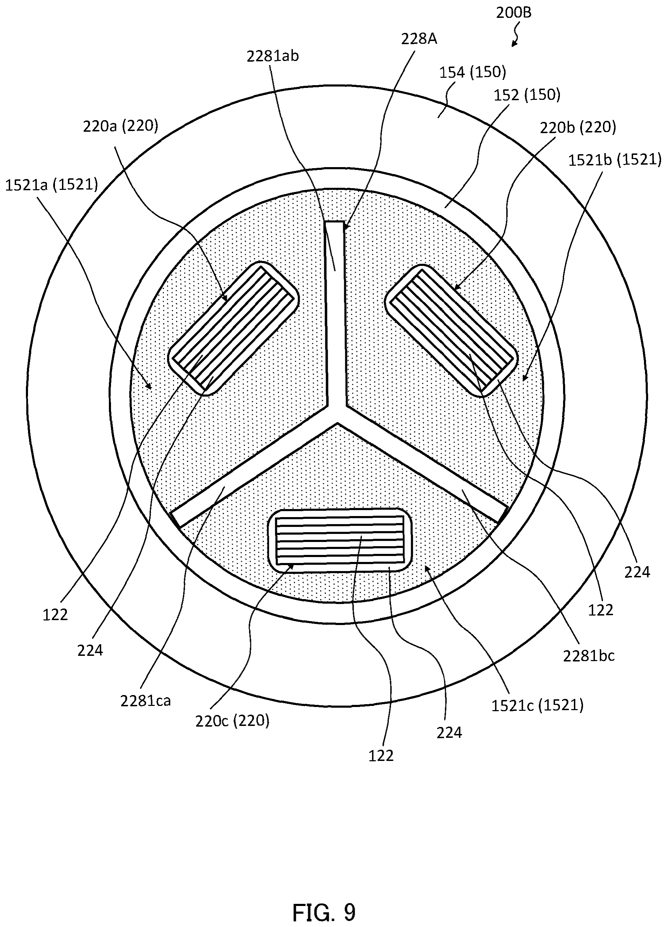

As shown in FIG. 9 as a Variation, inter-phase insulation spacer 228A may be accommodated in a loosely inserted state in thermal insulation pipe 150 (corrugated pipe 152) as in superconducting cable 200B. In this case, compared to inter-phase insulation spacer 228 described in Embodiment 2, it becomes easier to ensure the flexibility and bendability of superconducting cable 200B. Furthermore, the tips of partitions 2281ab, 2281bc, and 2281ca of inter-phase insulation spacer 228A are not joined to thermal insulation pipe 150 within internal space 1521. With this configuration, the plurality of chambers 1521a, 1521b, and 1521c are in a state where fluid can communicate between the chambers. Therefore, assuming that chambers 1521a and 1521b are arranged side by side above chamber 1521c as shown in FIG. 9, if liquid nitrogen partially vaporizes in chamber 1521a, the vaporized nitrogen can be placed in the gap formed above partition 2281ab without being trapped in chamber 1521a. Since cable cores 220 (cable cores 220a and 220b) are unlikely to be positioned in the upper part of partition 2281ab, the possibility of cable cores 220 (cable cores 220a and 220b) being exposed to the gas is low. In this way, by facilitating the movement of fluid (coolant) between chambers 1521a, 1521b, and 1521c, it is possible to suppress the occurrence of imbalance in the cooling effect. In FIG. 9, it appears that the tips of partitions 2281bc and 2281ca of inter-phase insulation spacer 228A are in contact with thermal insulation pipe 150, but fluid circulation is possible.

### (Other Variations)

As a further variation to above-described Embodiments 1 and 2 and above-described Variations 1 and 2, corrugated pipe 152 may be made of resin. Even in this case, as in Embodiments 1 and 2 and Variations 1 and 2, it is possible to simplify the overall structure and reduce the weight of superconducting cables 100, 200, 200A, and 200B while ensuring high current-carrying capacity.

By using resin for corrugated pipe 152, thermal insulation pipe 150 can be further reduced in weight compared to the case where it is made of metal, thereby achieving further weight reduction of superconducting cables 100, 200, 200A, and 200B.

The resin material of corrugated pipe 152 is preferably highly reliable at the cryogenic temperatures where the coolant is used. It is desirable that the resin material of corrugated pipe 152 has a cold resistance temperature of -50°C or lower. Also, it is desirable that the material of corrugated pipe 152 has flexibility and elasticity at the cryogenic temperatures where the coolant is used. Moreover, it is desirable that the resin material of corrugated pipe 152 is suitable for extrusion molding. Examples of resin materials constituting corrugated pipe 152 include polytetrafluoroethylene resin, polyphenylsulfone resin, and glass fiber reinforced resin. The resin material constituting corrugated pipe 152 may also be a rubber substitute material such as polyolefin resin. It is preferable that resin-made inner pipe 156a or outer pipe 156b in Variation 1 of Embodiment 2 have properties similar to the above-described properties desired for the resin material of corrugated pipe 152, and therefore, the inner or outer pipe may be made of the same resin material as that of corrugated pipe 152.

When corrugated pipe 152 is made of resin, the weight of corrugated pipe 152 can be, for example, 0.09 kg/m, thereby achieving a significant weight reduction compared to above-described metal corrugated pipe 152, which weighs 0.58 kg/m. Taking into account that the conventional double-pipe structure has also been replaced with a single-pipe structure, the weight of thermal insulation pipe 150 alone can be reduced to one-tenth or less of that of the conventional configuration, achieving a substantial reduction in weight.

As a further variation, if thermal insulation material 154 is made of a material having excellent mechanical properties such as impact resistance, resin corrugated pipe 152 can be protected by thermal insulation material 154, thereby improving the durability of superconducting cables 100, 200, 200A, and 200B. As described above, thermal insulation material 154 is made of a material capable of securing thermal insulation at cryogenic temperatures at which a coolant is used, and is arranged along the peripheral surface of corrugated pipe 152. As described above, thermal insulation material 154 may be a thermal insulation sheet. With this configuration, even in a single-pipe structure, sufficient thermal insulation suitable for superconducting cables 100, 200, and 200B can be provided. In addition, since thermal insulation material 154 is arranged to cover the outer peripheral surface of corrugated pipe 152, it is possible to ensure an adequate flow path for the coolant while also achieving reliable thermal insulation.

Furthermore, as in the present variation, by making corrugated pipe 152 out of resin and, as described above, also making inter-phase insulation spacer 228 out of resin, further weight reduction can be achieved. In this case, chambers 1521a, 1521b, and 1521c, in which respective cable cores 220-that is, superconducting stacked conductors 122-are disposed, can be formed by resin corrugated pipe 152 and partitions 2281ab, 2281bc, and 2281ca of inter-phase insulation spacer 228, all of which are made of resin. As a result, cable cores 220 can be arranged in a multicore structure while achieving inter-phase insulation, with a simple and extremely lightweight configuration. Note that inter-phase insulation spacer 228A may of course also be used as inter-phase insulation spacer 228 in this case.

The embodiments of the present invention have been specifically described above, but the present invention is not limited to the specific embodiments described above. Various modifications and changes can be made to the specific examples described in the above embodiments within the scope of the gist of the present invention described in the claims.

The disclosure of the specification, drawings, and abstract contained in the Japanese application of Patent Application No. 2023-013361 filed on January 31, 2023, is incorporated herein by reference.

### Industrial Applicability

The superconducting cable of the present invention can be suitably used as a power transmission cable or power supply cable.

### Reference Signs List

1 Electric propulsion system
11 Turbine
12 Fuel tank
13, 17 Output shaft
14 Superconducting generator
15 Inverter
16 Superconducting motor
18 Propeller
19 Cooling system
20, 21 Power transmission cable
100, 200, 200A, 200B Superconducting cable
102 Electrode
120, 220, 220a, 220b, 220c Cable core
122 Superconducting stacked conductor
122U Uppermost surface
122L Lowermost surface
1222 Superconducting coated conductor
1222a, 1222f Stabilization layer
1222b Substrate
1222c Intermediate layer
1222d Superconducting layer
1222e Protective layer
124, 224 Inter-phase insulation sheet
126 Strand insulation sheet
127 Gap
150 Thermal insulation pipe
152 Corrugated pipe
1521 Internal space
1521a, 1521b, 1521c Chamber
154 Thermal insulation material
156a Inner pipe
156b Outer pipe
156c Space
228, 228A Inter-phase insulation spacer
2281ab, 2281bc, 2281ca Partition

## Claims

1. A superconducting cable, comprising:
a thermal insulation pipe having an internal space for circulating a coolant during use; and
a plurality of superconducting stacked conductors, each being a stack of a plurality of tape-shaped superconducting coated conductors, the plurality of superconducting stacked conductors being insulated from one another and arranged in a multi-core structure within the internal space, wherein
the thermal insulation pipe is made of resin.

2. The superconducting cable according to claim 1, wherein
the thermal insulation pipe further includes an thermal insulation material disposed along an outer peripheral surface.

3. The superconducting cable according to claim 2, wherein
the thermal insulation pipe has a single-pipe structure composed of a corrugated pipe, and the thermal insulation material is provided to cover the outer peripheral surface of the thermal insulation pipe.

4. The superconducting cable according to claim 1, further comprising:
an insulation spacer disposed within the internal space of the thermal insulation pipe and including a plurality of partitions that radially extend in a radial direction in the thermal insulation pipe, wherein
the thermal insulation pipe, together with wall surfaces of the plurality of partitions, forms, in the internal space, a plurality of chambers in which the plurality of superconducting stacked conductors are individually disposed.

5. The superconducting cable according to claim 4, wherein
the insulation spacer is made of resin.

6. An electric propulsion system mounted on transportation equipment, the electric propulsion system comprising:
the superconducting cable according to claim 1;
a power source; and
an electric motor, wherein
the power source and the electric motor are connected to each other by the superconducting cable, and
the electric motor is driven to propel the transportation equipment by supplying power through the superconducting cable.

7. The electric propulsion system according to claim 6, wherein
the transportation equipment is an aircraft.
